# EUROPÄISCHE PATENTSCHRIFT

(11) **EP 0 491 724 B1**
(45) Veröffentlichungstag und Bekanntmachung des Hinweises auf die Patenterteilung: **05.01.1994**
(21) Anmeldenummer: 90912637.7
(22) Anmeldetag: 24.08.1990
(51) Int. Cl.: B23B 25/06, B23Q 17/22

(54) **WERKZEUGKOPF FÜR DEN EINSATZ IN WERKZEUGMASCHINEN**
TOOL HEAD FOR USE IN MACHINE TOOLS
TETE D'OUTIL POUR MACHINES-OUTILS

(30) Priorität: 09.09.1989 DE 3930196
(43) Veröffentlichungstag der Anmeldung: 01.07.1992
(73) Patentinhaber: KOMET Präzisionswerkzeuge Robert Breuning GmbH, D-74354 Besigheim (DE)
(72) Erfinder: MÜNDLEIN, Werner, D-7120 Bietigheim-Bissingen (DE); SCHEER, Gerhard, D-7121 Löchgau (DE); STOLZ, Gerhard, D-7121 Ingersheim (DE)
(74) Vertreter: Wolf, Eckhard, Dr.-Ing.
(86) Internationale Anmeldenummer: EP9001416
(87) Internationale Veröffentlichungsnummer: WO9103345

(56) Entgegenhaltungen:
- GB-B- 1 279 411
- US-A- 3 044 322
- US-A- 3 220 287
- US-A- 4 172 325
- US-A- 4 203 225
- US-A- 4 509 266
- US-A- 4 676 127
- Patent Abstracts of Japan, vol 10, no. 810, M465, abstract of Jp 60-221249, publ 1985.11.05 (OKUMA TEKKOSHO K.K.).

## Beschreibung

Die Erfindung betrifft einen Werkzeugkopf für den Einsatz in Werkzeugmaschinen mit einem um eine Drehachse rotierenden Grundkörper, mindestens einem relativ zum Grundkörper vorzugsweise quer zur Drehachse verstellbaren, mit mindestens einem Schneidwerkzeug bestückbaren Schieber, einer Einrichtung zur direkten Messung des Verstellwegs des Schiebers relativ zum Grundkörper und einer Einrichtung zur Auswertung und Anzeige der Wegmeßergebnisse.

Um den Schieber und das von ihm getragene Schneidwerkzeug genau einstellen zu können, ist es notwendig, den Verstellweg des Schiebers exakt zu messen. Die Messung des Verstellwegs erfolgt bei bekannten Werkzeugköpfen überwiegend indirekt, indem beispielsweise der Winkelweg einer den Schieber antreibenden Spindel gemessen und hieraus auf die von dem Schieber zurückgelegte Wegstrecke geschlossen wird. Dabei entstehen aufgrund unvermeidlicher Toleranzen Ungenauigkeiten in der Wegmessung, die sich nachteilig auf die Positioniergenauigkeit des Schneidwerkzeugs und die Reproduzierbarkeit der Einstellung auswirken.

Um diesen Nachteil zu vermeiden, ist es bei einem Werkzeugkopf der eingangs angegebenen Art bereits bekannt (DE-OS 35 26 712), den Verstellweg des Schiebers relativ zum Gehäuse auf direktem Wege durch optische Abtastung eines mit dem Schieber fest verbundenen inkrementalen Glasmaßstabs durch einen im Grundkörper angeordneten Lesekopf zu messen. Dabei wird das Meßlicht für die optische Abtastung der Meßskala über einen Lichtleiter von außen in das Innere des Werkzeugkopfes geleitet. Ebenso werden die Lichtsignale aus dem Glasmaßstab am Abtastelement in einen weiteren Meßlichtleiter eingeleitet, der mit einer außerhalb des rotierenden Grundkörpers ortsfest angeordneten Auswerteelektronik zur Auswertung der Wegmeßergebnisse verbunden ist. Wegen der relativ komplizierten optoelektronischen Anschlußtechnik ist die Handhabung des bekannten Werkzeugkopfes aufwendig und nicht ohne weiteres automatisierbar. Hinzu kommt, daß die Ablesung der Wegmeßergebnisse eine ortsgebundene Installation erfordert, so daß der Einsatz des bekannten Werkzeugkopfes auf bestimmte, diese Installation enthaltende Werkzeugmaschinen beschränkt ist.

Es ist ein Werkzeugkopf der eingangs angegebenen Art bekannt (US-A-4 676 127), bei dem ein Maßstab mittels sich seitlich des Grundkörpers erstreckenden, der Bewegung des Schiebers folgenden Trägerarmen an dem Schieber gehaltert ist und bei dem ein Sensor zur Verstellwegmessung seitlich an dem Grundkörper dem Maßstab gegenüberliegend befestigt ist. Aufgrund dieser seitlichen Anordnung greifen jedoch drehzahlabhängige, nicht kompensierte Zentrifugalkräfte an den drehenden Teilen der Meßeinrichtung an, die zu einer Verfälschung der Weglängenmessung führen können.

Ausgehend hiervon liegt der Erfindung die Aufgabe zugrunde, einen Werkzeugkopf der eingangs angegebenen Art zu schaffen, der universell einsetzbar ist und eine störungsfreie und genaue Verstellweganzeige gewährleistet.

Zur Lösung dieser Aufgabe wird gemäß der Erfindung die im Anspruch 1 angegebene Merkmalskombination vorgeschlagen. Weitere vorteilhafte Ausgestaltungen und Weiterbildungen der Erfindung ergeben sich aus den Unteransprüchen.

Die erfindungsgemäße Lösung geht u.a. von der Erkenntnis aus, daß ein universeller Einsatz des Werkzeugkopfes nur dann möglich ist, wenn die Meß- und Auswerteelektronik für die direkte Verstellwegmessung in das Innere des Grundkörpers verlegt wird und dabei die Besonderheiten des Betriebs an schnelldrehenden Werkzeugmaschinen berücksichtigt werden. Insbesondere ist bei drehenden Teilen dafür zu sorgen, daß die auf die Teile einwirkende Beschleunigungs- und Zentrifugalkräfte kompensiert werden, um keine drehzahlabhängigen Fehler in der Längenmessung zu erhalten.

Dementsprechend wird gemäß der Erfindung vorgeschlagen, daß die Meßskala und der Sensor in unmittelbarer Nähe der Drehachse in einander zugewandten, durch einen engen Spalt voneinander getrennten, von der Drehachse durchdrungenen Ebenen angeordnet sind.

Gemäß einer bevorzugten Ausgestaltung der Erfindung wird vorgeschlagen, daß die Meßskala und der Sensor in zur Drehachse senkrechten Ebenen angeordnet sind.

Im Hinblick auf die Meßgenauigkeit ist es zweckmäßig, wenn die Spaltweite weniger als 20 µm, vorzugsweise weniger als 10 µm beträgt. Wenn die Meßskala und der Sensor Bestandteile einer mit der Abtast- und Auswerteelektronik verbundenen kapazitiven Längenmeßeinrichtung sind, kann der Spalt mit einem vorzugsweise hochviskosen Dielektrikum ausgefüllt werden, das zwar eine Verschiebung der beiden Teile gegeneinander erlaubt, aber unter der Einwirkung der im drehenden Werkzeug angreifenden Fliehkraft nicht aus dem Spalt herausgedrängt wird.

Vorteilhafterweise sind die die Meßskala und den Sensor bildenden Meßstrukturen auf einem Glasträger angeordnet, vorzugsweise mittels Dünnschichttechnik auf diesem aufgebracht. Durch die hohe Formstabilität und den geringen thermischen Ausdehnungskoeffizienten von Glas werden mechanische und thermische Einflüsse auf das Wegmeßergebnis klein gehalten. Andererseits muß dafür gesorgt werden, daß der Sensor bzw. die Meßskala an einer zur Drehachse exakt senkrecht ausgerichteten Montagefläche des Grundkörpers bzw. des Schiebers befestigt wird. Um dies zu erreichen, kann gemäß einer vorteilhaften Ausgestaltung der Erfindung der ebene Glasträger mit seiner aktiven Oberfläche gegen zwei im Abstand voneinander angeordnete Montageleisten geklebt werden, während die Montageleisten mit ihren über den Glasträgerrand überstehenden freien Enden an der mit einer Ausnehmung für die Aufnahme des zum Grundkörper hin überstehenden Glasträgers versehenen Montagefläche befestigbar, vorzugsweise festklemmbar sind. Um ein kollisionsfreies Verschieben des Schiebers zu ermöglichen, sind im Schieber Ausnehmungen zur Aufnahme der Montageleisten angeordnet. Weiter kann am Schieber eine senkrecht zur Drehachse ausgerichtete Montagefläche für den Glasträger der Meßskala bzw. des Sensors vorgesehen werden, wobei der Glasträger auf über die Montagefläche überstehende Bolzen aufgesteckt, plan gegen die Montagefläche angedrückt und gegebenenfalls mit dieser mittels Gießharz verbunden werden kann.

Nach einer weiteren vorteilhaften Ausgestaltung der Erfindung ist ein im Grundkörper angeordnetes, radial ausgerichtetes Batteriefach zur Aufnahme einer Stabbatterie mit einem achsnah angeordneten, entgegen der Kraft einer radial nach innen vorgespannten Feder radial verschiebbaren Polstößel und einem vorzugsweise als Massepol ausgebildeten, am Grundkörper flüssigkeitsdicht anschraubbaren metallischen Fachdeckel vorgesehen. Diese Vorkehrungen gewährleisten eine weitgehend fliehkraftneutrale Anordnung der Stabbatterie, die sich am Fachdeckel abstützt und deren Längentoleranzen durch den federbelasteten Polstößel fliehkraftkompensierend ausgeglichen werden. Der Polstößel kann dabei in einem in eine Grundkörperaussparung eingesetzten isolierenden Kunststoffteil verschiebbar gelagert werden.

Nach einer weiteren bevorzugten Ausgestaltung der Erfindung besteht das den Grundkörper umfassende Mantelgehäuse aus einem schlagfesten, vorzugsweise glasfaserverstärkten Kunststoff, in welchem ein Sichtfenster für die Digitalanzeige angeordnet ist. Das Sichtfenster ist dabei zweckmäßig in einem ebenen Teil des im übrigen zylindrischen Mantelgehäuses angeordnet. Weiter können in der Nähe des Sichtfensters, vorzugsweise im ebenen Teil des Mantelgehäuses, von außen betätigbare Taster zur Ansteuerung der Abtast- und Auswerteelektronik angeordnet werden. Das Mantelgehäuse ist vorteilhafterweise zwischen einer am Grundkörper überstehenden Ringschulter und einem mit dem Grundkörper verbindbaren Flanschdeckel einspannbar. Das Sichtfenster ist im Gehäuse radial etwas zurückversetzt. Entsprechendes gilt für die im Bereich des Sichtfensters über den Gehäusemantel überstehenden Taster. Um Fehlbedienungen oder Beschädigungen des Sichtfensters und der Taster zu vermeiden, stehen die Ringschulter und der Flanschdeckel zumindest im ebenen Bereich radial über die Außenfläche des Mantelgehäuses über.

Für die Feinverstellung ist gemäß der Erfindung ein Verstellmechanismus für den Schieber vorgesehen, der eine außermittig im Grundkörper gelagerte, einen Gleitstein mit Schrägverzahnung tragende Spindel und ein mit einer komplementären Schrägverzahnung versehenes, mit dem Schieber starr verbundenes Gegenstück aufweist. Das schrägverzahnte Gegenstück kann im Zuge einer Vormontage zunächst schwimmend mit dem Schieber verbunden und mit dem schrägverzahnten Gleitstein in eine spielfreie richtungsgenaue Anlage gebracht werden. In dieser Stellung kann sodann das schrägverzahnte Gegenstück mit dem Schieber beispielsweise durch Ausgießen mit einem Gießharz starr verbunden und anschließend erforderlichenfalls verschweißt werden.

Die Abtast- und Auswerteelektronik kann erfindungsgemäß mit einem Digitalspeicher ausgestattet werden, der in Verbindung mit der Wegmeßeinrichtung und der Digitalanzeige erfindungsgemäß zur Bestimmung und Abspeicherung folgender Werte verwendet werden:
- einen mittels Sensor an der Meßskala abtastbaren, den Verstellweg des Schiebers gegenüber dem Grundkörper definierenden Relativwert, der in beliebigen Verschiebelagen des Schiebers auf Null setzbar, im Digitalspeicher abspeicherbar und von diesem in die Digitalanzeige abrufbar ist;
- einen mittels Sensor an der Meßskala abtastbaren, die absolute Lage des Schiebers gegenüber dem Grundkörper definierenden Absolutwert, in dessen Nullstellung das Werkzeug ausgewuchtet ist und der in dem Digitalspeicher abspeicherbar und von diesem in die Digitalanzeige abrufbar ist;
- ein einem Aufsatzwerkzeug individuell zugeordnetes Absolut-Sollmaß, das in dem Digitalspeicher abspeicherbar und von diesem in die Digitalanzeige abrufbar ist.

Um bei schnelldrehendem Werkzeugkopf eine gleichmäßige Signalabstrahlung und einen gleichmäßigen Empfang zu gewährleisten, sind die Sende- und Empfangselemente gemäß einer vorteilhaften Ausgestaltung der Erfindung in einem geschlossenen, in der umlaufenden Nut des Mantelgehäuses versenkten Diffuserring angeordnet.

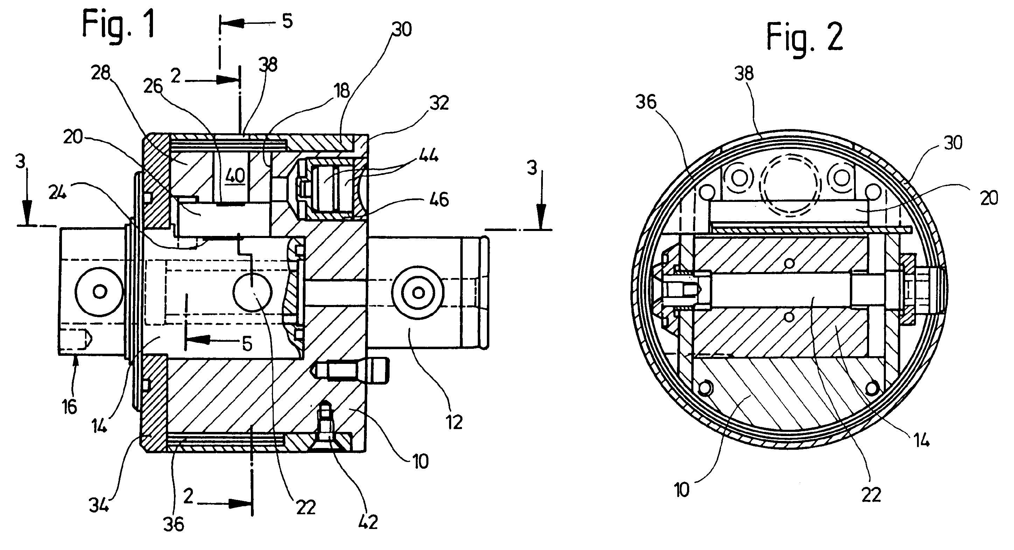

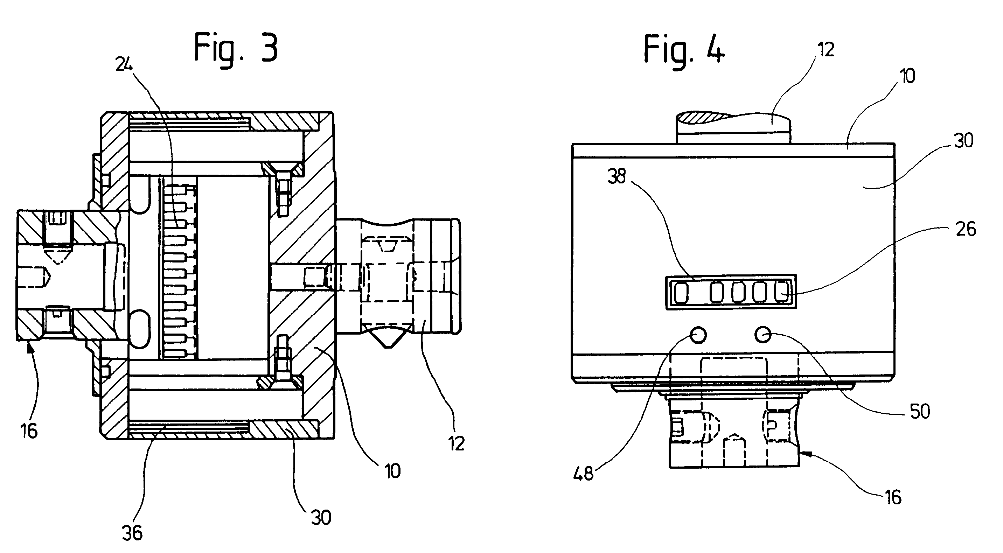

Im folgenden wird die Erfindung anhand einiger in der Zeichnung in schematischer Weise dargestellter Ausführungsbeispielen näher erläutert. Dabei wird für die Ausführungsbeispiele nach den Fig. 1 - 7 kein Patentschutz beansprucht, weil bei diesen Ausführungsbeispielen die Skala und der Sensor nicht in unmittelbarer Nähe der Drehachse angeordnet ist. Es zeigen
- Fig. 1: einen Schnitt durch einen Feindrehkopf mit Verstellmechanismus und digitaler Anzeige;
- Fig. 2: einen Schnitt entlang der Schnittlinie 2-2 der Fig. 1;
- Fig. 3: einen Schnitt entlang der Schnittlinie 3-3 der Fig. 1;
- Fig. 4: eine Seitenansicht des Feindrehkopfs nach Fig. 1 bis 3;
- Fig. 5: einen Schnitt entlang der Schnittlinie 5-5 der Fig. 1;
- Fig. 6: einen Schnitt durch einen Feindrehkopf mit Verstellmechanismus und optoelektronischer Sende- und Empfangseinheit in einer Darstellung entsprechend Fig. 1;
- Fig. 7: eine Seitenansicht des Feindrehkopfs nach Fig. 6;
- Fig. 8: einen Schnitt durch ein weiteres Ausführungsbeispiel eines Feindrehkopf mit Verstellmechanismus und digitaler Anzeige;
- Fig. 9: einen Schnitt entlang der Schnittlinie 9-9 der Fig. 8;
- Fig. 10: einen Schnitt entlang der Schnittlinie 10-10 der Fig. 8;
- Fig. 11: einen Schnitt entlang der Schnittlinie 11-11 der Fig. 10;
- Fig 12: ein Schema des Feindrehkopfs nach Fig. 8 bis 11;
- Fig. 13: ein Schema eines fernbedienbaren Feindrehkopfs mit integriertem Verstellmotor und Meßfühler.

Der in der Zeichnung dargestelle Feindrehkopf besteht im wesentlichen aus einem Grundkörper 10, einem starr, vorzugsweise einstückig mit dem Grundkörper 10 verbundenen Paßzapfen 12 für den Anschluß des Drehkopfes an eine rotierend angetriebene Einspannvorrichtung einer nicht dargestellten Werkzeugmaschine, einem quer zur Drehachse des Feindrehkopfs gegenüber dem Grundkörper verstellbaren, eine Aufnahmevorrichtung 16 für ein Schneidwerkzeug tragenden Schieber 14 sowie eine in einer Aussparung 18 des Grundkörpers 10 angeordnete elektronische Meß- und Auswertevorrichtung 20 für die Messung des Verstellwegs des Schiebers 14 und die weitere Auswertung der Meßergebnisse.

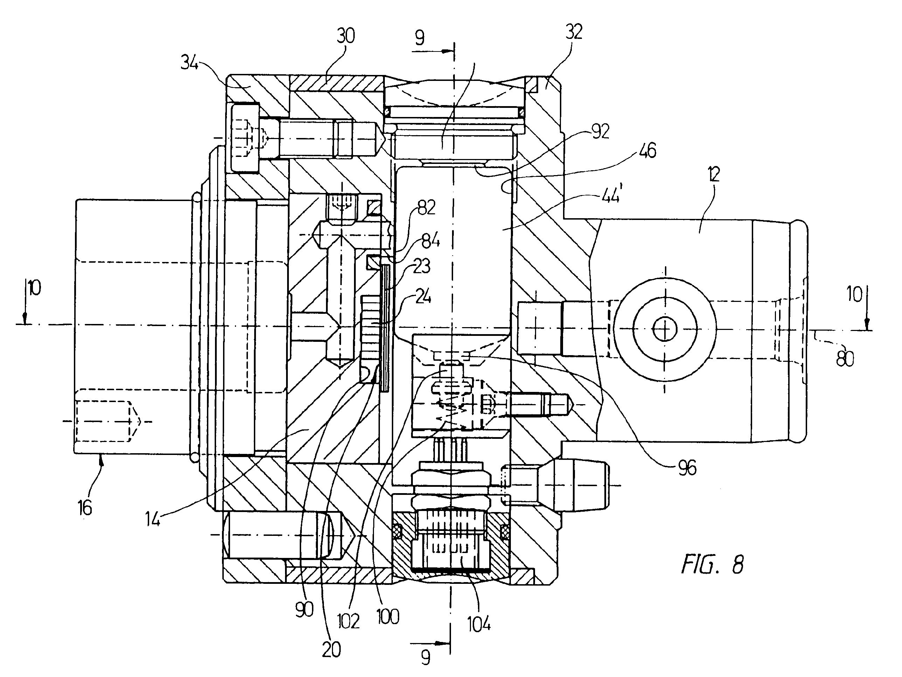

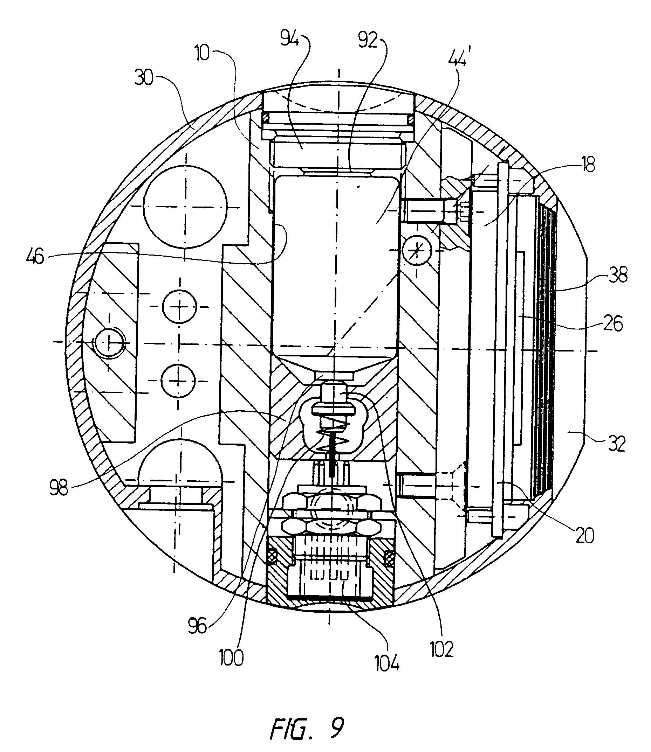

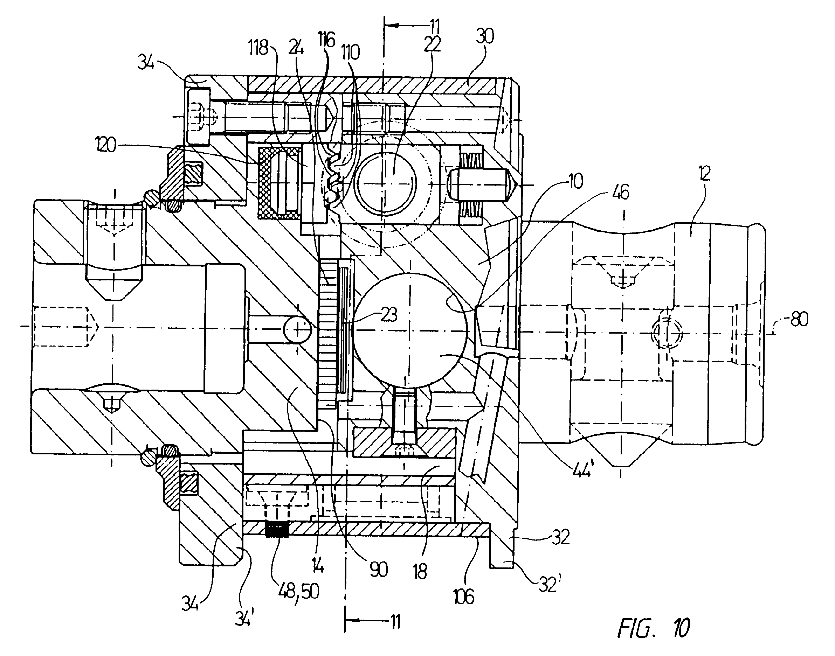

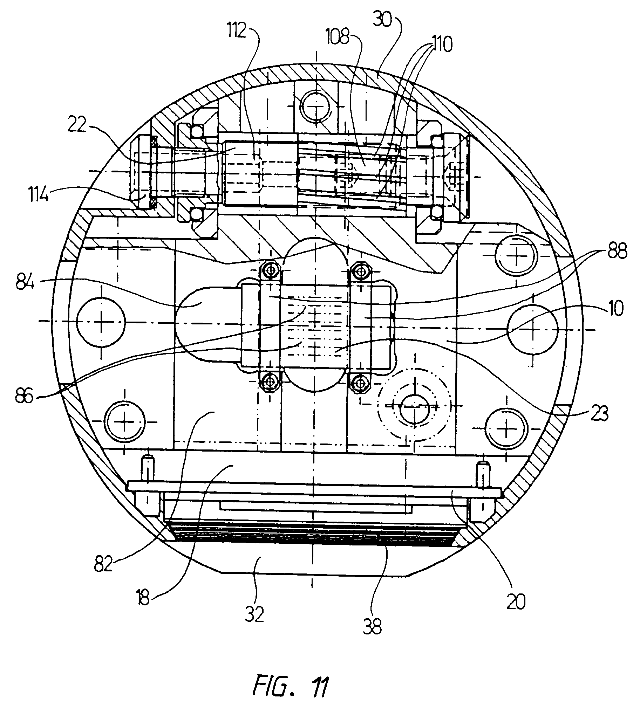

Bei den gezeigten Ausführungsbeispielen wird der Schieber 14 durch eine im Grundkörper verschiebefest gelagerte, von Hand drehbare Gewindespindel 22 gegenüber dem Grundkörper 10 verschoben. An einer der Längsseitenflächen des Schiebers befindet sich eine von einem mit der Elektronikschaltung 20 elektrisch verbundenen Sensor 23 elektronisch abtastbare, beispielsweise als kapazitiver Linearmaßstab ausgebildete Meßskala 24. Weiter weist die Meß- und Auswerteelektronik 20 bei den in den Fig. 1 bis 5 sowie 8 bis 11 gezeigten Ausführungsbeispielen eine radial nach außen weisende, beispielsweise als LED- oder LCD-Anzeige ausgebildete Digitalanzeige 26 auf. Die vorzugsweise in Kunststoff eingegossene Elektronikschaltung 20 ist im Falle der Fig. 1 bis 5 starr mit einem Fullkörper 28 verbunden, der in der Aussparung 18 d Grundkörpers 10 zum Zwecke der Justierung des Lesekopfs gegenüber der Meßskala 24 verschiebbar angeordnet ist. Nach außen hin ist die Aussparung 18 durch einen zwischen einer am Grundkörper 10 umlaufenden Schulter 32 und einem mittels mehrerer achsparalleler Schrauben am Grundkörper 10 befestigbaren Flanschdeckel 34 eingespannten Mantelgehäuse 30 aus Edelstahl (Fig. 1 bis 5) oder aus Kunststoff (Fig. 8 bis 11) flüssigkeitsdicht verschlossen. Das metallische Mantelgehäuse 30 (Fig. 1 bis 5) erfüllt dabei zugleich die Funktion einer Abschirmung der elektronischen Schaltung 20 gegen äußere Störstrahlung im Sinne eines Faradayschen Käfigs. Auf seiner Innenseite kann das Mantelgehäuse 30 eine Stufenaussparung aufweisen, die mit einem Acrylglasring 36 ausgefüttert ist. Der Acrylglasring 36 kann in das Mantelgehäuse 30 entweder eingeklebt oder eingegossen werden. Weiter weist das Mantelgehäuse 30 eine Fensteraussparung 38 und der Füllkörper 28 einen Durchbruch 40 auf, durch die hindurch die Digitalanzeige 26 von außen her ablesbar ist. Eine Indexschraube 42 sorgt dafür, daß das Mantelgehäuse 30 mit seinem Fenster 38 am Grundkörper 10 in Umfangsrichtung exakt ausgerichtet wird. Die Stromversorgung der elektronischen Schaltung 20 erfolgt über Knopfzellen 44 oder eine Stabbatterie 44', die in einem nach außen hin hermetisch abgeschlossenen Batteriegehäuse 46 angeordnet sind. Zur Betätigung der elektronischen Schaltung sind Taster 48,50 vorgesehen, die durch Bohrungen im Füllkörper 28, in der Acrylglasschicht 36 und im Mantelgehäuse 30 flüssigkeitsdicht nach außen geführt sind. Einer der Taster 50 ist zur Aktivierung der Elektronik 20 und zur Nullstellung der Digitalanzeige bestimmt, während über den anderen Taster 48 eine Umschaltung zwischen Millimeter- und Zoll-Maß vorgenommen werden kann.

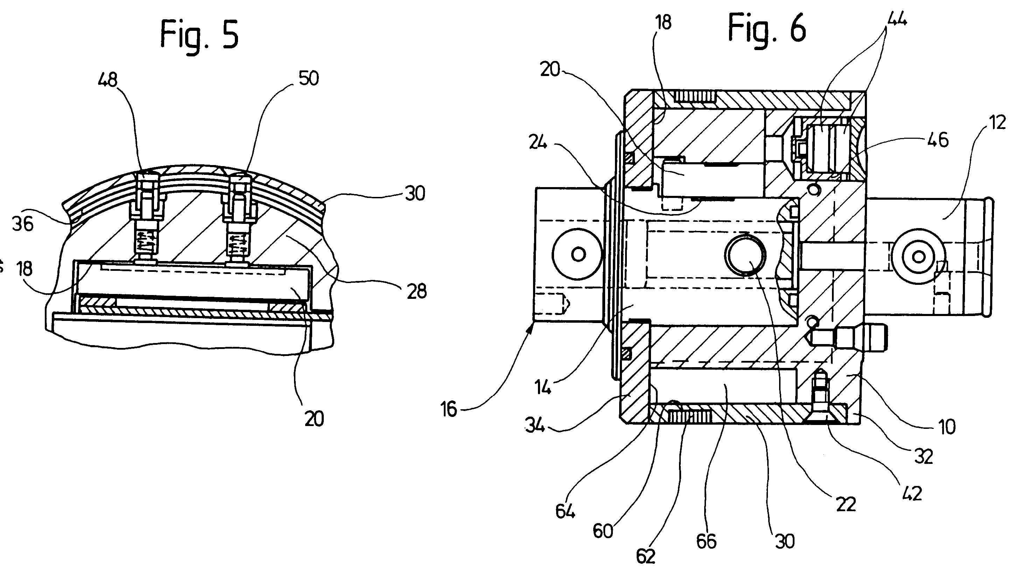

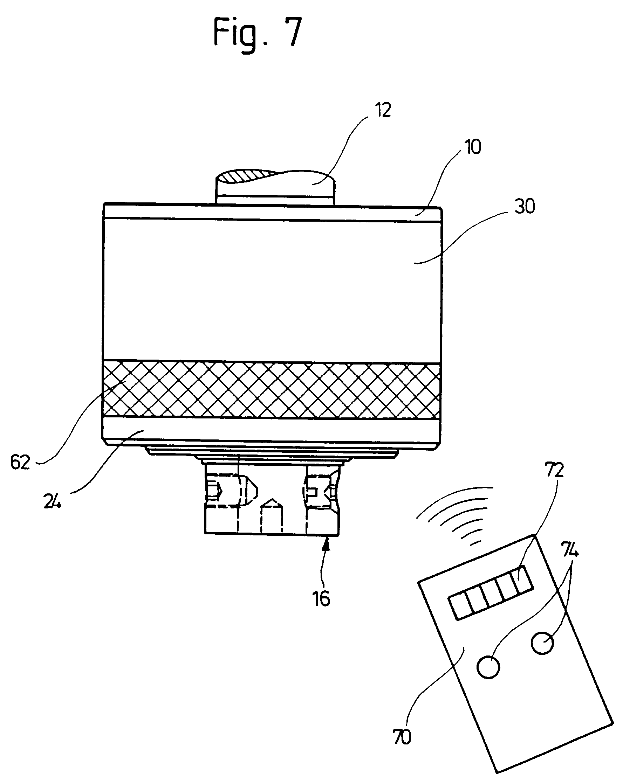

Bei dem in den Fig. 6 und 7 gezeigten Ausführungsbeispiel fehlt die Digitalanzeige. An deren Stelle ist in einer nach außen offenen umlaufenden Nut 60 des Metallrings 30 ein mit Sende- und Empfangselementen für Infrarotstrahlung bestückter Diffuserring 62 eingebettet, der mit einer in einer weiteren Aussparung 64 des Grundkörpers 10 angeordneten Sende- und Empfangselektronik 66 elektrisch verbunden ist. Durch den Diffuserring kann Infrarotlicht auch bei schnelldrehendem Werkzeugkopf rundum gesendet und empfangen werden. Die Sendeelektronik 66 ist - ebenso wie die Meß- und Auswerteelektronik 20 - durch den Metallring 30 gegen Störstrahlung von außen abgeschirmt und gegen unerwünschten Flüssigkeitszutritt abgedichtet. Die Kommunikation mit der im Werkzeugkopf angeordneten Elektronik erfolgt über ein gleichfalls mit einem Sendeempfänger für Infrarotstrahlung ausgestatteten Fernbedienungsgerät 70, an welchem u.a. eine Digitalanzeige 72 zur Anzeige des Verschiebewegs des Schiebers im Werkzeugkopf sowie diverse Bedienungsknöpfe 74 für die Ein- und Ausschaltung und die Skalenumschaltung angeordnet sind. Um einen flexiblen Einsatz zu ermöglichen, ist das Fernbedienungsgerät 70 als batteriebetriebenes Handgerät ausgebildet. Um beispielsweise eine statistische Prozeßkontrolle durchführen zu können, kann das Fernbedienungsgerät außerdem mit einer mikroprozessorgestützen Schaltungsanordnung ausgestattet werden, in der Meßdaten gespeichert, gegebenenfalls ausgedruckt und/oder an einen Zentralrechner zur weiteren statistischen Auswertung übertragen werden können. Es ist auch möglich, das Fernbedienungsgerät 70 mit einer seriellen Schnittstelle für die Kommunikation mit einem externen Rechner auszustatten.

Bei dem in Fig. 8 bis 11 gezeigten Ausführungsbeispiel ist der metallische Grundkörper 10 mit einer zur Drehachse 80 des Werkzeugs senkrechten Planfläche 82 versehen, die in ihrem zentralen Bereich eine Ausnehmung 84 zur Aufnahme des Sensors 23 aufweist. Der Sensor 23 besteht aus einem Glasträger, auf dessen aktiver Oberfläche eine Meßstruktur 86 aufgedampft oder in Dünnschichttechnik aufgetragen ist. Auf der aktiven Seite des Glasträgers sind seitlich neben der Meßstruktur 86 Montageleisten 88 aufgeklebt, die mit ihren über den Glasträgerrand überstehenden freien Enden an der Montagefläche 82 des Grundkörpers 10 befestigt, vorzugsweise angeklemmt sind. Mit dieser Befestigungstechnik wird erreicht, daß die Aktivfläche des Glasträgers mit der Montagefläche exakt fluchtet und daß dennoch die Unterschiede in der thermischen Ausdehnung zwischen Grundkörper und Glasträger ohne Bruchgefahr für den Glasträger kompensiert werden können.

Die Meßskala 24 weist ebenfalls einen Glasträger auf, der an einer zur Drehachse 80 exakt senkrechten Montageebene 90 des Schiebers 14 so befestigt ist, daß Unterschiede in der thermischen Ausdehnung ausgeglichen werden können. Die einander zugewandten aktiven Flächen der Meßskala 24 und des Sensors 23 weisen einen gegebenenfalls mit einem hochviskosen Dielektrikum ausgefüllten Spaltabstand von 10 bis 20 µm voneinander auf. Mit den genannten Maßnahmen wird eine fliehkraftneutrale Anordnung des Sensors und der Meßskala erreicht, die eine drehzahlunabhängige Längenmessung im µ-Bereich gewährleistet.

Das Batteriefach 46 ist im Grundkörper 10 unmittelbar unterhalb des Sensors 23 in radialer Ausrichtung angeordnet. Es ist zur Aufnahme einer Stabbatterie 44' bestimmt, die sich mit ihrem radial nach außen weisenden Massepol 92 an einem radialen Schraubdeckel 94 abstützt und die mit ihrem achsnah angeordneten Pluspol 96 gegen einen in einem isolierenden Kunststoffeinsatz 98 entgegen der Kraft einer Feder 100 verschiebbaren Polzapfen 102 stirnseitig anliegt. Die Feder 100 ist in Richtung Drehachse 80 radial so vorgespannt, daß der achsnah angeordnete Polzapfen 102 auch unter der Einwirkung der bei schnelldrehendem Werkzeug wirkenden Zentrifugalkraft nicht vom Batteriepol 96 abgehoben wird.

Auf der der Batterie radial gegenüberliegenden Seite des Kunststoffeinsatzes 98 befindet sich eine von außen her zugängliche Steckbuchse 104, die an die Elektronikschaltung angeschlossen ist und als Schnittstelle für die Datenübertragung von und zu einem externen Datenerfassungs- bzw. Verarbeitungsgerät dient.

Das zwischen den Schultern 32 und 34 eingespannte Mantelgehäuse besteht bei dem Ausführungsbeispiel nach Fig. 8 bis 11 aus einem schlagfesten, vorzugsweise glasfaserverstärkten Kunststoff. Es weist eine ebene Teilfläche 106 auf, die gegenüber der zylindrischen Außenkontur zurückversetzt ist und durch radial überstehende Teile 32',34' der Schultern 32,34 gegen äußere mechanische Einwirkungen geschützt ist. In dem ebenen Teil 106 des Mantelgehäuses befindet sich einmal das transparente Sichtfenster 38 und zum anderen die Taster 48,50. Das Sichtfenster ist von innen her in einer Aussparung des Mantelgehäuses eingeklebt.

Um den zentralen Bereich des Werkzeugkopfes für die fliehkraftneutrale Unterbringung der Meßskala 24, des Sensors 23 und der Batterie 44' freizuhalten, ist der Verstellmechanismus für den Schieber 14 außermittig im Grundkörper und im Schieber angeordnet. Der Verstellmechanismus enthält eine im Grundkörper verschiebefest und drehbar gelagerte Verstellspindel 22, auf der ein Gleitkörper 108 mit schräg ausgerichteter Flächenverzahnung 110 geführt ist. Die Betätigung der Spindel 22 erfolgt über einen Innensechskant 112, der mit einem geeigneten Schlüssel durch eine Öffnung in der Halteschraube 114 hindurch erreichbar ist. Die Schrägverzahnung 110 kämmt mit einer komplementären Schrägverzahnung 116 eines am Schieber 14 angeordneten Gegenstücks 118. Um eine spielfreie und richtungsgenaue Ausrichtung der Schrägverzahnungen 116 und 110 zu erhalten, wird das Gegenstück 118 zunächst schwimmend mit dem Schieber 14 verbunden und in Eingriff mit der Schrägverzahnung 110 gebracht. Sodann wird der Zwischenraum 120 zwischen dem Gegenstück 118 und dem Schieber 14 mit einem Gießharz ausgefüllt.

Die Elektronik 20 enthält einen Spezialbaustein für die Meßsignalauswertung der kapazitiven Längenmeßeinrichtung. Die Auswertetechnik ist so gewählt, daß eine Genauigkeit in der Längenmessung von ca. 0,2 µm erreicht wird. Damit kann unter Berücksichtigung der sonst noch vorhandenen Toleranzen eine Genauigkeit um 1 µm im Durchmesser gewährleistet werden. Weiter enthält die Elektronik einen Mikroprozessor einen Datenspeicher und eine speziell für das Feindrehwerkzeug entwickelte Software. Die Dateneingabe kann entweder über die Tastatur 48,50 oder über die serielle Schnittstelle 104 erfolgen. Damit sind u.a. folgende Funktionen möglich:
- Abspeicherung einer in die Digitalanzeige abrufbaren Identifikationsnummer für das Werkzeug;
- Verstellweganzeige, die in beliebigen Stellungen des Schiebers auf Null gesetzt werden kann;
- absolute Positionsanzeige des Schiebers, in deren Nullstellung das Werkzeug werksseitig ausgewuchtet wird;
- Abspeicherung eines in die Digitalanzeige abrufbaren, für einen Werkzeugeinsatz am Feindrehkopf individuell einstellbaren Sollmaßes;
- Batterieüberwachung mit Ladungskontrollanzeige;
- automatische Fehler- und Störanzeigen, insbesondere bei Erreichen einer konstruktiv vorgeschlagenen Verstellgrenze.

Weiter besteht softwaremäßig die Möglichkeit, Werkzeugdaten über längere Zeit zu speichern, insbesondere um eine Betriebsdatenerfassung oder eine Fehlerdiagnose zu ermöglichen. Die Auswertung dieser Daten kann nach Auslesen über die Schnittstelle 104 auf einem separaten Computer erfolgen.

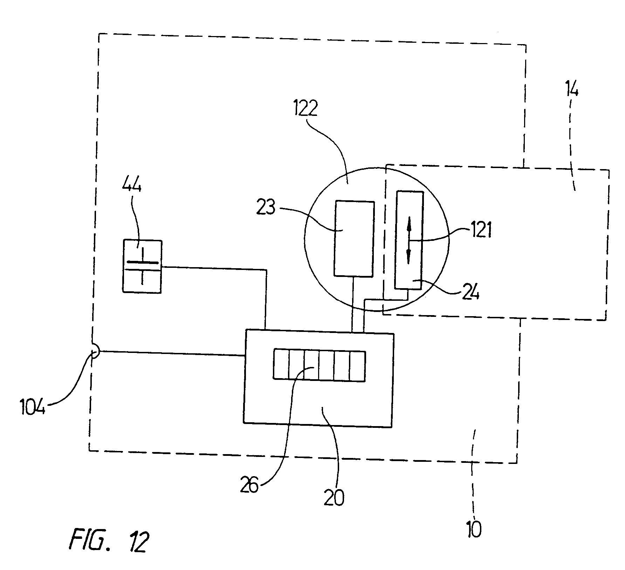

In Fig. 12 ist ein Schema eines Feindrehkopfs in der Ausbaustufe gemäß Fig. 8 bis 11 gezeigt. Am Grundkörper 10 des Feindrehkopfs ist der Schieber 14 in Richtung des Doppelpfeils 121 verschiebbar angeordnet. Die Verschiebelage wird mit Hilfe eines an die Abtast- und Auswerteelektronik 20 angeschlossenen kapazitiven Meßsystems 122 bestehend aus schieberfester Meßskala 24 und grundkörperfestem Sensor 23 unmittelbar gemessen und in einer im Werkzeugkopf integrierten Digitalanzeige 26 angezeigt. Die Stromversorgung erfolgt über eine im Grundkörper 10 angeordnete Batterie 44. Eine Schnittstelle 104 sorgt dafür, daß ein Datenaustausch mit der Abtast- und Auswerteelektronik möglich ist.

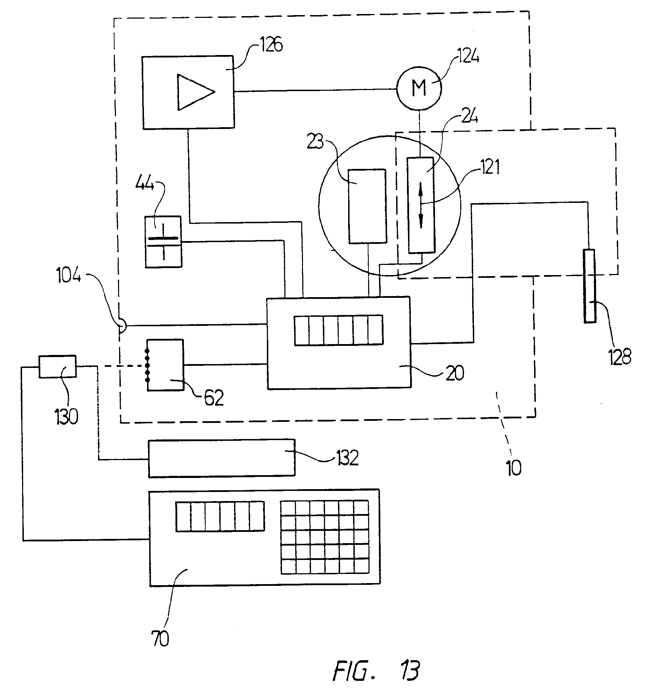

Das Schema nach Fig. 13 zeigt den Feindrehkopf in einer weiteren Ausbaustufe: Der Schieber 14 ist über einen im Grundkörper integrierten Verstellmotor 124 in Richtung des Doppelpfeils 121 relativ zum Grundkörper 10 verschiebbar. Die Ansteuerung des Verstellmotors erfolgt über eine Ansteuerelektronik 126, die ihrerseits über einen mit der Abtast- und Auswerteelektronik 20 gekoppelten Steuer- und Regelkreis kontrolliert wird. Die Stell- bzw. Regelgrößen gelangen entweder über einen auf der Außenseite des Schiebers 14 angeordneten Meßfühler 128 zur unmittelbaren Werkstückvermessung oder mittelbar über einen im Werkzeugkopf integrierten optoelektronischen Sende-Empfänger 62 zu dem mit der Abtast- und Auswerteelektronik 20 verbundenen Regler. Die Kommunikation mit dem Sende-Empfänger 62 erfolgt über einen externen Sende-Empfänger 130, an den eine Fernbedienung 70 und/oder eine externe Meßeinrichtung 132 für die Werkstückvermessung angeschlossen werden kann.

## Patentansprüche

1. Werkzeugkopf für den Einsatz in Werkzeugmaschinen mit einem um eine Drehachse (80) rotierenden Grundkörper (10), mindestens einem relativ zum Grundkörper (10) vorzugsweise quer zur Drehachse (80) verstellbaren, mit mindestens einem Schneidwerkzeug bestückbaren Schieber (14), einer Einrichtung zur direkten Messung des Verstellwegs des Schieber (14) relativ zum Grundkörper (10) und einer Einrichtung (20,26) zur Auswertung und Anzeige der Wegmeßergebnisse, wobei der Grundkörper (10) eine Aussparung zur Aufnahme einer batteriebetriebenen Abtast- und Auswerteelektronik (20) gegebenenfalls mit einer radial nach außen weisenden Digitalanzeige (26) aufweist und wobei entweder der Schieber (14) eine Meßskala (24) und der Grundkörper einen die Meßskala (24) abtastenden, mit der Abtast- und Auswerteelektronik (20) verbundenen Sensor (23) oder der Grundkörper eine Meßskala und der Schieber einen die Meßskala abtastenden und mit der Abtast- und Auswerteelektronik (20) verbundenen Sensor aufweisen, **dadurch gekennzeichnet,** daß die Meßskala (24) und der Sensor (23) in unmittelbarer Nähe der Drehachse (80) in einander zugewandten, durch einen engen Spalt voneinander getrennten, von der Drehachse (80) durchdrungenen Ebenen (82,90) angeordnet sind.

2. Werkzeugkopf nach Anspruch 1, **dadurch gekennzeichnet,** daß die Meßskala (24) und der Sensor (23) in zur Drehachse (80) senkrechten Ebenen (82,90) angeordnet sind.

3. Werkzeugkopf nach Anspruch 1 oder 2, **dadurch gekennzeichnet**, daß die Spaltweite weniger als 20 µm, vorzugsweise weniger als 10 µm beträgt.

4. Werkzeugkopf nach einem der Ansprüche 1 bis 3, **dadurch** **gekennzeichnet,** daß die Meßskala (24) und der Sensor (23) Bestandteile einer mit der Abtast- und Auswerteelektronik (20) verbundenen kapazitiven Längenmeßeinrichtung sind.

5. Werkzeugkopf nach einem der Ansprüche 1 bis 4, **dadurch** **gekennzeichnet,** daß der Spalt mit einem hochviskosen Dielektrikum ausgefüllt ist.

6. Werkzeugkopf nach einem der Ansprüche 1 bis 5, **dadurch** **gekennzeichnet,** daß die Meßskala (24) und der Sensor (23) auf je einem Glasträger angeordnete, vorzugsweise mittels Dünnschichttechnik aufgebrachte Meßstrukturen (86) aufweisen.

7. Werkzeugkopf nach einem der Ansprüche 1 bis 6, **dadurch** **gekennzeichnet,** daß der Sensor (23) bzw. die Meßskala an einer zur Drehachse (80) senkrecht ausgerichteten Montagefläche (82) des Grundkörpers (10) befestigt ist.

8. Werkzeugkopf nach Anspruch 6 oder 7, **dadurch gekenn****zeichnet,** daß der ebene Glasträger des Sensors (23) bzw. der Meßskala mit seiner die Meßstruktur (86) aufweisenden aktiven Oberfläche gegen zwei im Abstand voneinander angeordnete Montageleisten (88) geklebt ist, und daß die Montageleisten (88) mit ihren über den Glasträgerrand überstehenden freien Enden an der mit einer Ausnehmung (84) für die Aufnahme des zum Grundkörper (10) hin überstehenden Glasträgers versehenen Montageflächen (82) befestigbar, vorzugsweise festklemmbar sind.

9. Werkzeugkopf nach Anspruch 8, **dadurch gekennzeichnet,** daß im Schieber (14) Ausnehmungen zur Aufnahme der Montageleisten (88) angeordnet sind.

10. Werkzeugkopf nach einem der Ansprüche 6 bis 9, **dadurch** **gekennzeichnet,** daß der Schieber (14) eine senkrecht zur Drehachse (80) ausgerichtete Montagefläche (90) für den Glasträger der Meßskala (24) bzw. des Sensors aufweist.

11. Werkzeugkopf nach Anspruch 10, **dadurch gekennzeichnet,** daß der Glasträger auf über die Montagefläche überstehende Bolzen aufgesteckt, plan gegen die Montagefläche (90) angedrückt und gegebenenfalls mit dieser mittels Gießharz verbunden ist.

12. Werkzeugkopf nach einem der Ansprüche 1 bis 11, **gekenn****zeichnet durch** einen im Grundkörper (10) angeordnetes, radial ausgerichtetes Batteriefach (46) zur Aufnahme einer Stabbatterie (44') mit einem achsnah angeordneten, entgegen der Kraft einer radial nach innen vorgespannten Feder (10) radial verschiebbaren Polstössel (102) und einem vorzugsweise als Massepol ausgebildeten, am Grundkörper (10) flüssigkeitsdicht anschraubbaren metallischen Fachdeckel (94).

13. Werkzeugkopf nach Anspruch 12, **dadurch gekennzeichnet,** daß der Polstössel (102) in einem in eine Grundkörperaussparung eingesetzten isolierenden Kunststoffteil (98) verschiebbar gelagert ist.

14. Werkzeugkopf nach einem der Ansprüche 1 bis 13, **dadurch** **gekennzeichnet,** daß die Abtast- und Auswerteelektronik (20) durch ein den Grundkörper (10) an seinem Umfang vollständig umfassendes, ein Sichtfenster (28) für die Digitalanzeige (26) aufweisendes Mantelgehäuse (30) abgedichtet ist.

15. Werkzeugkopf nach Anspruch 14, **dadurch gekennzeichnet,** daß das Sichtfenster (38) in einem ebenen, radial zurückversetzten Teil (106) des im übrigen zylindrischen aus schlagfestem Kunststoff bestehenden Mantelgehäuses (30) angeordnet ist.

16. Werkzeugkopf nach Anspruch 15, **dadurch gekennzeichnet,** daß im ebenen Teil (106) des Mantelgehäuses (30) von außen betätigbare Taster (48,50) zur Ansteuerung der Abtast- und Auswerteelektronik (20) angeordnet sind.

17. Werkzeugkopf nach einem der Ansprüche 14 bis 16, **dadurch gekennzeichnet,** daß das Mantelgehäuse (30) zwischen einer am Grundkörper (10) überstehenden Ringschulter (32) und einem mit dem Grundkörper (10) verbindbaren Flanschdeckel (34) oder Flanschring einspannbar ist.

18. Werkzeugkopf nach Anspruch 17, **dadurch** **gekennzeichnet,** daß die Ringschulter (32) und der Flanschdeckel (34) zumindest im Bereich des ebenen Teils (106) des Mantelgehäuses radial über die Außenfläche des Mantelgehäuses überstehende Vorsprünge (32',34') aufweisen.

19. Werkzeugkopf nach einem der Ansprüche 1 bis 18, **gekenn****zeichnet durch** einen Verstellmechanismus für den Schieber, der eine außermittig im Grundkörper (10) gelagerte, einen Gleitstein (108) mit Schrägverzahnung (110) tragende Spindel (22) und ein mit einer komplementären Schrägverzahnung (116) versehenes, mit dem Schieber (14) starr verbundenes Gegenstück (118) aufweist.

20. Werkzeugkopf nach Anspruch 19, **dadurch gekennzeichnet,** daß das schrägverzahnte Gegenstück (118) in spielfreier, richtungsgenauer Anlage gegen den Gleitstein (108) mittels Gießharz (120) mit dem Schieber (14) verbindbar und gegebenenfalls anschließend an diesem anschweißbar ist.

21. Werkzeugkopf nach einem der Ansprüche 1 bis 20, **gekenn****zeichnet durch** einen mittels des Sensors (23) an der Meßskala (24) erfaßbaren, den Verstellweg des Schiebers (14) gegenüber dem Grundkörper (10) definierenden Relativwert, der in beliebigen Verschiebelagen des Schiebers (14) auf Null setzbar, in einem Digitalspeicher der Abtast- und Auswerteelektronik abspeicherbar und von dieser in die Digitalanzeige (26) abrufbar ist.

22. Werkzeugkopf nach einem der Ansprüche 1 bis 21, **gekenn****zeichnet durch** einen mittels des Sensors (23) an der Meßskala (24) erfaßbaren, die absolute Lage des Schiebers (14) gegenüber dem Grundkörper (10) definierenden Absolutwert, in dessen Nullstellung das Werkzeug ausgewuchtet ist und der in einem Digitalspeicher der Abtast- und Auswerteelektronik (20) abspeicherbar und von dieser in die Digitalanzeige (26) abrufbar ist.

23. Werkzeugkopf nach einem der Ansprüche 1 bis 22, **gekenn****zeichnet durch** ein einem Aufsatzwerkzeug individuell zugeordnetes Absolut-Sollmaß, das in einem Digitalspeicher der Abtast- und Auswerteelektronik (20) abspeicherbar und von diesem in die Digitalanzeige abrufbar ist.

24. Werkzeugkopf nach einem der Ansprüche 1 bis 23, **gekenn****zeichnet durch** einen im Grundkörper (10) angeordneten, in Verstellrichtung (121) auf den Schieber (14) einwirkenden, über eine mit der Abtast- und Auswerteelektronik (20) gekoppelte Ansteuerungselektronik (126) ansteuerbaren Verstellmotor (124).

25. Werkzeugkopf nach einem der Ansprüche 1 bis 24, **gekenn****zeichnet durch** einen außenseitig am Schieber (14) angeordneten, mit der Abtast- und Auswerteelektronik (20) koppelbaren Meßfühler (128) zur Werkstückvermessung.

26. Werkzeugkopf nach einem der Ansprüche 1 bis 25, **gekenn****zeichnet durch** einen im Grundkörper (10) angeordneten, mit der Abtast- und Auswerteelektronik verbundenen, vorzugsweise optoelektronischen Sende-Empfänger (62) für den drahtlosen Datenaustausch mit einer einen externen Sende-Empfänger (130) aufweisenden Fernbedienungseinheit (70) und/oder Werkzeugvermessungseinrichtung (132).

27. Werkzeugkopf nach einem der Ansprüche 1 bis 26, **dadurch** **gekennzeichnet,** daß die Abtast- und Auswerteelektronik (20,70) mit einer mikroprozessorgestützten Datenerfassung ausgestattet ist, die eine vorzugsweise serielle Schnittstelle (104) für die Übertragung der gespeicherten Daten aufweist.

28. Werkzeugkopf nach einem der Ansprüche 1 bis 27, **gekenn****zeichnet durch** eine in einem Mantelgehäuse (30) des Grundkörpers angeordnete, mit der Abtast- und Auswerteelektronik (20) verbundene Sende- und Empfangselektronik (66), in einer nach außen offenen und nach innen geschlossenen Ringnut (60) oder in über den Umfang verteilt angeordneten randoffenen Aussparungen des Mantelgehäuses (30) angeordnete, mit der Sende- und Empfangselektronik (66) verbundene optoelektronische Sende- und Empfangselemente (62) sowie eine mit den Sende- und Empfangselementen (62) kommunizierende externe Fernbedienungselektronik (70).

29. Werkzeugkopf nach Anspruch 28, **dadurch gekennzeichnet,** daß die Sende- und Empfangselemente (62) in einem geschlossenen, in der Ringnut (60) des Mantelgehäuses (30) versenkten Diffusorring (62) angeordnet sind.

## Claims

1. A tool head for use in machine tools comprising a main body (10) rotating about an axis of rotation (80), at least one slide (14) adjustable relative to the main body (10), preferably perpendicularly with respect to the axis of rotation (80), and equipped with at least one cutting tool, a device for the direct measuring of the displacement path of the slide (14) relative to the main body (10) and a device (20, 26) for evaluating and displaying the results of the path measurement, with the main body (10) having a recess to receive therein a battery-operated scanning and evaluating electronics device (20), if necessary, with a radially outwardly facing digital display (26), and with either the slide (14) having a measuring scale (24) and the main body having a sensor (23) scanning the measuring scale (24) and connected to the scanning and evaluating electronics device (20), or the main body having a measuring scale and the slide having a sensor scanning the measuring scale and connected to the scanning and evaluating electronics device (20), characterized in that the measuring scale (24) and the sensor (23) are arranged in the direct vicinity of the axis of rotation (80) in planes (82, 90) which face one another, are separated from one another by a narrow gap, and through which planes extends the axis of rotation (80).

2. The tool head according to Claim 1, characterized in that the measuring scale (24) and the sensor (23) are arranged in planes (82, 90) which are perpendicular with respect to the axis of rotation (80).

3. The tool head according to Claim 1 or 2, characterized in that the gap width is less than 20 µm, preferably less than 10 µm.

4. The tool head according to one of the Claims 1 to 3, characterized in that the measuring scale (24) and the sensor (23) are parts of a capacitive length-measuring device connected to the scanning and evaluating electronics device (20).

5. The tool head according to one of the Claims 1 to 4, characterized in that the gap is filled with a highly viscous dielectric.

6. The tool head according to one of the Claims 1 to 5, characterized in that the measuring scale (24) and the sensor (23) each have measuring structures (86) arranged on a glass carrier, preferably applied by means of a thin-layer technique.

7. The tool head according to one of the Claims 1 to 6, characterized in that the sensor (23) or the measuring scale is fastened to a mounting surface (82) on the main body (10), which mounting surface is aligned perpendicularly with respect to the axis of rotation (80).

8. The tool head according to Claim 6 or 7, characterized in that the flat glass carrier of the sensor (23) or of the measuring scale is glued with its active surface having the measuring structure (86) to two spaced mounting bars (88), and that the free ends of the mounting bars (88) which project beyond an edge of the glass-carrier, can be fastened, preferably clamped, to the mounting surface (82), which mounting surface is provided with a recess (84) for receiving therein the glass carrier facing toward the main body (10).

9. The tool head according to Claim 8, characterized in that recesses for receiving the mounting bars (88) are arranged in the slide (14).

10. The tool head according to one of the Claims 6 to 9, characterized in that the slide (14) has a mounting surface (90) for the glass carrier of the measuring scale (24) or the sensor, which mounting surface is aligned perpendicularly with respect to the axis of rotation (80).

11. The tool head according to Claim 10, characterized in that the glass carrier is mounted onto bolts which project from the mounting surface, is pressed flat against the mounting surface (90), and, if necessary, is connected to same by means of a moldable resin.

12. The tool head according to one of the Claims 1 to 11, characterized by a radially aligned battery compartment (46) arranged in the main body (10) to receive a flashlight battery (44'), the compartment having a pole rod (102) arranged near the axis and which is radially movable against the force of a radially inwardly, initially tensioned, spring (100) and a metallic compartment lid (94), preferably designed as a grounded pole, and screwably secured and sealed off against liquid to the main body (10).

13. The tool head according to Claim 12, characterized in that the pole rod (102) is movably supported in an insulating plastic part (98) inserted into a main body recess.

14. The tool head according to one of the Claims 1 to 13, characterized in that the scanning and evaluating electronics device (20) is sealed off by a shell (30) completely surrounding the main body (10) at its periphery, and having a viewing window (28) for the digital display (26).

15. The tool head according to Claim 14, characterized in that the viewing window (38) is arranged in a flat, radially recessed part (106) of the otherwise cylindrical shell (30) consisting of an impact-resistant plastic.

16. The tool head according to Claim 15, characterized in that in the flat part (106) of the shell (30) there are arranged switches (48, 50) which can be externally operated for controlling the scanning and evaluating electronics device (20).

17. The tool head according to one of the Claims 14 to 16, characterized in that the shell (30) can be clamped between an annular shoulder (32) projecting over the main body (10) and a flanged lid (34) or flanged ring connectable to the main body (10).

18. The tool head according to Claim 17, characterized in that the annular shoulder (32) and the flanged lid (34) have at least in the area of the flat part (106) of the shell, projections (32', 34') projecting radially beyond the outer surface of the shell.

19. The tool head according to one of the Claims 1 to 18, characterized by an adjusting mechanism for the slide which includes a spindle (22) supported off-center in the main body (10) and carrying a guide structure (108) in the form of a helical tooth system, and which has a counterpart (118) provided with a complementary helical tooth system (116) fixedly connected to the slide (14).

20. The tool head according to Claim 19, characterized in that the helically toothed counterpart (118) can be connected in a clearance free, direction-exact orientation against a guide structure (108) and to the slide (14) by means of moldable resin (120), and, if necessary, can subsequently be welded to the slide.

21. The tool head according to one of the Claims 1 to 20, characterized by a relative value acquirable by means of the sensor (23) on the measuring scale (24), and defining the displacement path of the slide (14) relative to the main body (10), which relative value can in various displacement positions of the slide (14) be set to zero, can be stored in a digital store of the scanning and evaluating electronics device and can be called from same into the digital display (26).

22. The tool head according to one of the Claims 1 to 21, characterized by an absolute value acquirable by means of the sensor (23) on the measuring scale (24), and defining the absolute position of the slide (14) relative to the main body (10), in the zero position of which absolute value the tool is balanced, and which can be stored in a digital store of the scanning and evaluating electronics device (20) and can be called from same into the digital display (26).

23. The tool head according to one of the Claims 1 to 22, characterized by an absolute real measurement value individually associated with an attachment tool, which measurement can be stored in a digital store of the scanning and evaluating electronics device (20) and can be called from same into the digital display.

24. The tool head according to one of the Claims 1 to 23, characterized by a servomotor (124) arranged in the main body (10), acting in displacement direction (121) onto the slide (14), and controllable through a control electronics device (126) coupled to the scanning and evaluating electronics device (20).

25. The tool head according to one of the Claims 1 to 24, characterized by a primary element (128) for the workpiece measurement, which primary element is arranged on the outside on the slide (14), and can be coupled to the scanning and evaluating electronics device (20).

26. The tool head according to one of the Claims 1 to 25, characterized by a preferably optoelectronic transceiver (62) arranged in the main body (10), and connected to the scanning and evaluating electronics device, for the wireless data exchange with a remote-control device (70) having an external transceiver (130) and/or a tool-measuring device (132).

27. The tool head according to one of the Claims 1 to 26, characterized in that the scanning and evaluating electronics device (20, 70) is equipped with microprocessor-supported data acquisition capability, and which has a preferably external data port (104) for the transmission of the stored data.

28. The tool head according to one of the Claims 1 to 27, characterized by a transmitting and receiving electronics device (66) arranged in a shell (30) of the main body and connected to the scanning and evaluating electronics device (20), optoelectronic transmitting and receiving elements (62) arranged in an outwardly open and inwardly closed annular groove (60) or in edge-open recesses of the shell (30), which recesses are distributed over the periphery and connected to the transmitting and receiving electronics device (66), and an external remote-control electronics device (70) communicating with the transmitting and receiving elements (62)

29. The tool head according to Claim 28, characterized in that the transmitting and receiving elements (62) are arranged in a closed diffuser ring (62) countersunk in the annular groove (60) of the shell (30).

## Revendications

1. Tête d'outil pour machines-outils, comprenant un corps de base (10) tournant autour d'un axe de rotation (80), au moins un curseur (14) qui peut être déplacé par rapport au corps de base (10), de préférence perpendiculairement à l'axe de rotation (80), et équipé d'au moins un outil de coupe, un dispositif pour la mesure directe du déplacement du curseur (14) par rapport au corps de base (10) et un dispositif (20, 26) pour l'interprétation et l'affichage des résultats de mesure de déplacement, le corps de base (10) présentant un évidement pour la réception d'une électronique d'exploration et d'interprétation (20) fonctionnant sur batterie, éventuellement avec un affichage numérique (26) dirigé radialement vers l'extérieur, le curseur (14) étant muni d'une échelle de mesure (24) et le corps de base comportant un détecteur (23) qui explore ladite échelle de mesure (24) et est relié à l'électronique d'exploration et d'interprétation (20), ou le corps de base étant muni d'une échelle de mesure et le curseur comportant un détecteur qui explore ladite échelle de mesure et est relié à l'électronique d'exploration et d'interprétation (20), **caractérisée en ce** que l'échelle de mesure (24) et le détecteur (23) sont disposés à proximité immédiate de l'axe de rotation (80) dans des plans (82, 90) tournés l'un vers l'autre, séparés par une étroite fente et traversés par l'axe de rotation (80).

2. Tête d'outil selon la revendication 1, caractérisée en ce que l'échelle de mesure (24) et le détecteur (23) sont disposés dans des plans (82, 90) orientés perpendiculairement par rapport à l'axe de rotation (80).

3. Tête d'outil selon l'une des revendications 1 ou 2, caractérisée en ce que la largeur de la fente est inférieure à 20 µm, de préférence inférieure à 10 µm.

4. Tête d'outil selon l'une des revendications 1 à 3, caractérisée en ce que l'échelle de mesure (24) et le détecteur (23) font partie d'un dispositif de mesure de longueurs capacitif couplé avec l'électronique d'exploration et d'interprétation (20).

5. Tête d'outil selon l'une des revendications 1 à 4, caractérisée en ce que la fente est remplie d'un diélectrique trés visqueux.

6. Tête d'outil selon l'une des revendications 1 à 5, caractérisée en ce que l'échelle de mesure (24) et le détecteur (23) présentent des structures de mesure (86) réalisées à chaque fois sur un support en verre, de préférence au moyen de la technique de couches minces.

7. Tête d'outil selon l'une des revendications 1 à 6, caractérisée en ce que le détecteur (23) et respectivement l'échelle de mesure sont fixés sur une surface de montage (82) du corps de base (10) orientée perpendiculairement par rapport à l'axe de rotation (80).

8. Tête d'outil selon l'une des revendications 6 ou 7, caractérisée en ce que le support en verre plan du détecteur (23) et respectivement de l'échelle de mesure est collé avec sa surface active munie de la structure de mesure (86) contre deux baguettes de montage (88) disposées à distance l'une de l'autre, et que les baguettes de montage (88) peuvent être fixées, de préférence bloquées, avec leurs extrémités libres qui dépassent du bord du support en verre, sur la surface de montage (82) munie d'un évidement (84) pour la réception du support en verre lequel dépasse en direction du corps de base (10).

9. Tête d'outil selon la revendication 8, caractérisée en ce que dans le curseur (14) sont prévus des évidements pour la réception des baguettes de montage (88).

10. Tête d'outil selon l'une des revendications 6 à 9, caractérisée en ce que le curseur (14) comporte une surface de montage (90) pour le support en verre de l'échelle de mesure (24) et respectivement du détecteur, orientée perpendiculairement par rapport à l'axe de rotation (80).

11. Tête d'outil selon la revendication 10, caractérisée en ce que le support en verre est emboîté sur des boulons dépassant de la surface de montage, appliqué à plat contre la surface de montage (90) et éventuellement solidarisé avec celle-ci au moyen de la résine à couler.

12. Tête d'outil selon l'une des revendications 1 à 11, caractérisée en ce qu'elle comprend un logement de batterie (46) orienté radialement dans le corps de base (10) et destiné à recevoir une pile-bâton (44') munie d'un poussoir polaire (102) disposé à proximité de l'axe et pouvant être déplacé radialement contre la force d'un ressort (10) radialement précontraint vers l'intérieur, et d'un couvercle de logement (94) métallique conformé de préférence en pôle de masse et pouvant être vissé de manière étanche aux liquides sur le corps de base (10).

13. Tête d'outil selon la revendication 12, caractérisée en ce que le poussoir polaire (102) est monté de manière mobile dans un élément en matière plastique isolante (98) inséré dans un évidement du corps de base.

14. Tête d'outil selon l'une des revendications 1 à 13, caractérisée en ce que l'électronique d'exploration et d'interprétation (20) est rendue étanche par une enveloppe (30) qui entoure complétement la périphérie du corps de base (10) et comporte une fenêtre (28) pour l'affichage numérique (26).

15. Tête d'outil selon la revendication 14, caractérisée en ce que la fenêtre (38) est placée dans une partie (106) plane et radialement en retrait de l'enveloppe (30) présentant par ailleurs une forme cylindrique et constituée d'une matière plastique résistant aux chocs.

16. Tête d'outil selon la revendication 15, caractérisée en ce que dans la partie plane (106) de l'enveloppe (30) sont disposés des boutons-poussoirs (48, 50) manipulables de l'extérieur pour la commande de l'électronique d'exploration et d'interprétation (20).

17. Tête d'outil selon l'une des revendications 14 à 16, caractérisée en ce que l'enveloppe (30) peut être enserrée entre un épaulement annulaire (32) qui dépasse du corps de base (10) et un couvercle à bride (34) ou anneau de bride qui peut être couplé avec le corps de base (10).

18. Tête d'outil selon la revendication 17, caractérisée en ce que l'épaulement annulaire (32) et le couvercle à bride (34) présentent au moins dans la région de la partie plate (106) de l'enveloppe des saillies (32', 34') qui dépassent radialement de la surface extérieure de l'enveloppe.

19. Tête d'outil selon l'une des revendications 1 à 18, caractérisée en ce qu'elle comprend un mécanisme de réglage pour le curseur, qui comporte une broche (22) montée de manière excentrée dans le corps de base (10) et portant un coulisseau (108) avec denture hélicoïdale (110) et un élément conjugué (118) muni d'une denture hélicoïdale complémentaire (116) et solidaire du curseur (14).

20. Tête d'outil selon la revendication 19, caractérisée en ce que l'élément conjugué (118) à denture hélicoïdale, appliqué sans jeu, dans une orientation exacte, contre le coulisseau (108), peut être solidarisé avec le curseur (14) au moyen de la résine à couler (120), puis soudé éventuellement sur ce dernier.

21. Tête d'outil selon l'une des revendications 1 à 20, caractérisée par une valeur relative pouvant être déterminée au moyen du détecteur (23) sur l'échelle de mesure (24) et définissant le déplacement du curseur (14) par rapport au corps de base (10), laquelle peut être remise à zéro dans des positions quelconques du curseur (14), stockée dans une mémoire numérique de l'électronique d'exploration et d'interprétation et appelée dans celle-ci vers l'affichage numérique (26).

22. Tête d'outil selon l'une des revendications 1 à 21, caractérisée par une valeur absolue pouvant être déterminée au moyen du détecteur (23) sur l'échelle de mesure (24) et définissant la position absolue du curseur (14) par rapport au corps de base (10), dans la position zéro de laquelle l'outil est équilibré et qui peut être stockée dans une mémoire numérique de l'électronique d'exploration et d'interprétation (20) et appelée dans celle-ci vers l'affichage numérique (26).

23. Tête d'outil selon l'une des revendications 1 à 22, caractérisée par une valeur absolue de consigne associée individuellement à un outil adaptable, qui peut être stockée dans une mémoire numérique de l'électronique d'exploration et d'interprétation (20) et appelée dans celle-ci vers l'affichage numérique.

24. Tête d'outil selon l'une des revendications 1 à 23, caractérisée en ce qu'elle comprend un servomoteur (124) disposé dans le corps de base (10), agissant sur le curseur (14) dans la direction de réglage (121) et pouvant être commandé par l'intermédiaire d'une électronique de commande (126) couplée avec l'électronique d'exploration et d'interprétation (20).

25. Tête d'outil selon l'une des revendications 1 à 24, caractérisée en ce qu'elle comprend un capteur (128) pour la mesure de la pièce à usiner, qui est disposé extérieurement sur le curseur (14) et peut être couplé avec l'électronique d'exploration et d'interprétation (20).

26. Tête d'outil selon l'une des revendications 1 à 25, caractérisée en ce qu'elle comprend un émetteur-récepteur (62), de préférence optoélectronique, disposé dans le corps de base (10) et relié à l'électronique d'exploration et d'interprétation, pour l'échange de données sans fil avec une unité de télécommande (70) et/ou un dispositif de mesure d'outil (132) équipés d'un émetteur-récepteur externe (130).

27. Tête d'outil selon l'une des revendications 1 à 26, caractérisée en ce que l'électronique d'exploration et d'interprétation (20, 70) est équipée d'un système d'acquisition de données assisté par microprocesseur qui comprend une interface série (104) pour la transmission des données mémorisées.

28. Tête d'outil selon l'une des revendications 1 à 27, caractérisée en ce qu'elle comprend une électronique d'émission et de réception (66) logée dans une enveloppe (30) du corps de base et couplée avec l'électronique d'exploration et d'interprétation (20), des éléments émetteurs et récepteurs optoélectroniques (62) placés dans une rainure annulaire (60) ouverte vers l'extérieure et fermée vers l'intérieur ou dans des évidements de l'enveloppe (30) répartis sur la circonférence et ouverts aux bords, et reliés à l'électronique d'émission et de réception (66), ainsi qu'une électronique de télécommande (70) externe qui communique avec les éléments émetteurs et récepteurs (62).

29. Tête d'outil selon la revendication 28, caractérisée en ce que les éléments émetteurs et récepteurs (62) sont disposés dans un anneau diffuseur (62) fermé noyé dans la rainure annulaire (60) de l'enveloppe (30).
